# FASCICULE DE BREVET EUROPEEN

(11) **EP 1 034 018 B1**
(45) Date de publication et mention de la délivrance du brevet: **12.02.2003**
(21) Numéro de dépôt: 98954541.3
(22) Date de dépôt: 09.11.1998
(51) Int. Cl.: B01D 3/00

(54) **DISTRIBUTEUR DE LIQUIDE POUR COLONNE DE DISTILLATION OSCILLANTE, ET COLONNE DE DISTILLATION CORRESPONDANTE**
FLÜSSIGKEITSVERTEILER FÜR OSZILLIERENDE DESTILLATIONSKOLONNE UND EINE SOLCHE KOLONNE
LIQUID DISPENSER FOR OSCILLATING DISTILLING COLUMN, AND CORRESPONDING DISTILLING COLUMN

(30) Priorité: 17.11.1997 FR 9714379
(43) Date de publication de la demande: 13.09.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: DARREDEAU, Bernard, F-78500 Sartrouville (FR)
(74) Mandataire: Mercey, Fiona Susan
(86) Numéro de dépôt international: FR9802388
(87) Numéro de publication internationale: WO99025446

(56) Documents cités:
- DE-B- 1 113 680
- GB-A- 2 039 779
- GB-A- 2 062 489
- US-A- 4 776 989

## Description

La présente invention est relative à un distributeur de liquide pour colonne de distillation oscillante. Elle s'applique en particulier aux colonnes de distillation d'air embarquées sur des structures flottantes telles que des plates-formes pétrolières en mer ou des barges.

Les plates-formes pétrolières en mer produisent des gaz résiduaires. Pour des raisons économiques et environnementales, il devient de plus en plus nécessaire de récupérer ces gaz. Une méthode consiste en leur conversion en hydrocarbures plus lourds , sous forme liquide et donc plus facilement transportables, par le procédé Fischer-Tropsch, lequel consomme de grandes quantités d'oxygène.

Il serait donc intéressant de pouvoir embarquer une colonne de distillation d'air sur une plate-forme ou une barge, mais le bon fonctionnement d'un tel équipement se heurte à de sérieuses difficultés. Ainsi, un premier impératif est que le liquide soit uniformément distribué en tête de colonne sur toute la section de celle-ci malgré les oscillations de son axe dues à la houle.

L'invention a pour but de fournir un distributeur de liquide dont le fonctionnement soit très peu sensible à de telles oscillations.

A cet effet, l'invention a pour objet un distributeur de liquide pour colonne de distillation oscillante, caractérisé en ce qu'il comprend :
- un distributeur primaire comportant des ouvertures de distribution de liquide et délimitant N1 premiers compartiments, avec N ≥ 2;
- des moyens d'alimentation équilibrée en liquide de chacun des premiers compartiments; et
- un distributeur secondaire disposé sous le distributeur primaire et comprenant une cuvette à fond perforé muni de lumières, ce fond occupant sensiblement toute la section de la colonne de distillation, cette cuvette étant subdivisée par des cloisons en N2 seconds compartiments, avec N2 > N1;
- le rapport de l'aire de chaque second compartiment à la somme des sections des ouvertures du distributeur primaire qui l'alimentent étant sensiblement constant d'un second compartiment à un autre.

Le distributeur selon l'invention peut comporter une ou plusieurs des caractéristiques suivantes :
- tous les seconds compartiments ont sensiblement la même aire et le même taux de perforation;
- le nombre N1 est inférieur à 5 et le nombre N2 de l'ordre de plusieurs dizaines;
- le distributeur primaire comprend une cuvette primaire dont le fond perforé a la même configuration que celui de la cuvette secondaire et est superposé à ce dernier;
- lesdits moyens d'alimentation comprennent un séparateur de phases et une conduite d'alimentation reliée en amont à la partie inférieure de ce séparateur et en aval à des tubes qui sont perforés à l'aplomb de chacun des premiers compartiments, le rapport de l'aire d'un premier compartiment a la somme des sections des perforations correspondantes des tubes étant constant d'un premier compartiment à un autre;
- les tubes sont piqués en des points adjacents de la conduite d'alimentation et comportent des orifices adjacents à l'axe central du distributeur;
- lesdits moyens d'alimentation comprennent un séparateur de phases et des tubes perforés reliés à des points adjacents de la partie inférieure du séparateur.

L'invention a également pour objet une colonne de distillation comprenant un distributeur tel que défini ci-dessus.

Dans un mode de réalisation d'une telle colonne de distillation, ledit distributeur de liquide est disposé à un premier niveau de la colonne, notamment en tête de colonne, et la colonne comporte, à au moins un second niveau, un second distributeur de liquide tel que défini plus haut.

Un mode de réalisation de l'invention va maintenant être décrit en regard du dessin annexé, sur lequel :
- la Figure 1 représente schématiquement une colonne de distillation oscillante équipée de deux distributeurs de liquide conformes à l'invention, embarquée sur une structure flottante;
- la Figure 2 représente schématiquement, à plus grande échelle et en coupe suivant la ligne I-I de la Figure 3, le distributeur de tête de la colonne de distillation de la Figure 1;
- la Figure 3 est une vue en plan de ce distributeur; et
- la Figure 4 est une vue prise en coupe suivant la ligne IV-IV de la Figure 2.

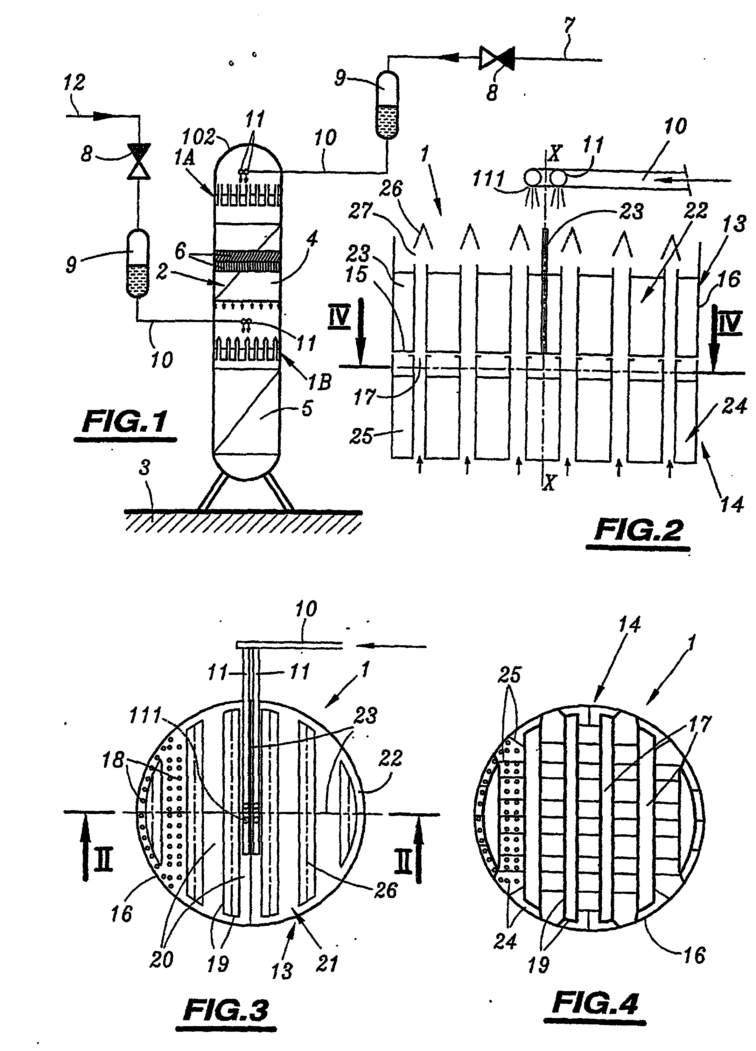

Le distributeur 1 représenté aux Figures 2 à 4 est destiné à être monté en tête d'une colonne 2 de distillation d'air, qui est schématisée sur la Figure 1 en tant que colonne basse pression d'une double colonne de distillation d'air.

La colonne 2 est fixée sur une structure flottante 3, schématisée sur la Figure 1, de même que la colonne moyenne pression de la double colonne de distillation (non représentée). On n'a fait figurer sur la Figure 1 que les éléments utiles pour la compréhension de la présente invention, mais la double colonne comporte bien entendu tous les-éléments classiques dans la technique.

Plus particulièrement, la colonne 2 est subdivisée en un tronçon supérieur de distillation 4 et un tronçon inférieur de distillation 5, tous deux constitués de garnissages ondulés-croisés. Comme il est bien connu, un tel garnissage comporte une superposition de tronçons ou packs 6 de garnissage ondulé-croisé, dont chacun a la forme d'une galette cylindrique occupant toute la section de la colonne.

Chaque pack 6 est constitué d'un empilement de bandes ondulées à ondes obliques. Chaque bande comporte un plan général vertical, toutes les bandes ont la même hauteur, et les ondes sont alternativement inclinées dans un sens et dans l'autre d'une bande à la suivante. Ainsi, les ondes des bandes adjacentes se touchent en un grand nombre de points d'intersection. De plus, les packs 6 sont décalés angulairement de 90° d'un pack au suivant par rapport à l'axe général de la colonne. Au-dessus du tronçon supérieur 4, la colonne contient un distributeur 1 tel que décrit plus loin, qui est le distributeur de tête 1A de la colonne. Au-dessous du tronçon 4 et au-dessus du tronçon de distillation 5 est disposé un second distributeur analogue, qui constitue un distributeur intermédiaire 1B.

En service, du "liquide pauvre" (azote à peu près pur soutiré en tête de la colonne moyenne pression) arrivant via une conduite d'alimentation 7, et détendu à la pression de la colonne 2 dans une vanne de détente 8, est introduit dans un séparateur de phases 9. Le liquide recueilli dans ce dernier est introduit, via un collecteur d'alimentation 10 relié à la partie inférieure du séparateur, dans deux tubes parallèles 11 dont chacun comporte deux orifices inférieurs 111. Ces deux tubes sont disposés dans le dôme supérieur 102 de la colonne et forment les moyens d'alimentation en liquide du distributeur 1A. Le distributeur 1A distribue ce liquide sur toute la section du pack 6 supérieur du tronçon de distillation 4, d'une manière qui sera décrite plus loin.

Le liquide issu de ce tronçon 4, enrichi en oxygène, tombe, par toute la surface inférieure de ce tronçon, sur le distributeur intermédiaire 1B. De plus, du "liquide riche" de même composition (air enrichi en oxygène, collecté en cuve de la colonne moyenne pression), provenant de la colonne moyenne pression via une conduite 12, est ajouté à ce liquide au moyen d'un ensemble vanne de détente 8-séparateur de phases 9-collecteur 10-tubes 11 identique à celui décrit plus haut. L'ensemble du liquide est redistribué par le distributeur 1B sur toute la section de la colonne, pour former le reflux du tronçon de distillation inférieur 5.

On décrira maintenant la structure des distributeurs 1A et 1B en regard des Figures 2 à 4.

Le distributeur 1A est constitué de deux parties, à savoir un distributeur primaire 13 et un distributeur secondaire 14 disposé au-dessous et des moyens d'alimentation 9 à 11 précités

Le distributeur primaire 13 comporte une cuvette ouverte vers le haut, ayant un fond 15 horizontal et une paroi périphérique cylindrique 16 qui s'élève sur ce fond. Le fond 15 comporte six lumières 17 de forme allongée suivant la direction parallèle aux tubes 11, qui laissent libres d'une part une couronne annulaire périphérique et d'autre part cinq bandes parallèles à ladite direction. Cette couronne et ces bandes sont perforées d'un grand nombre N de trous 18, lesquels ont un diamètre suffisant pour éviter tout risque de bouchage par des impuretés contenues dans le liquide à distribuer. Le nombre N est typiquement de l'ordre de 1000 à 3000 pour une colonne de 4 m de diamètre.

Chaque lumière 17 est entièrement bordée d'une paroi verticale ascendante 19, ce qui délimite avec la paroi périphérique 16 cinq goulottes rectilignes 20 à l'aplomb des bandes précitées, et une goulotte annulaire périphérique 21 qui communique avec toutes les goulottes 20.

De plus, la cuvette est subdivisée en quatre compartiments 22 de même aire par deux cloisons verticales 23 perpendiculaires l'une à l'autre, qui se coupent suivant l'axe central X-X de la cuvette, lequel coïncide avec l'axe central de la colonne 2. L'une des cloisons 23 passe par le plan médian de la goulotte 20 médiane.

Les tubes 11 sont adjacents l'un à l'autre et disposés à l'aplomb de la troisième goulotte 20, de part et d'autre de la cloison 23 qui la divise, avec pour chacun d'eux un orifice 111 débouchant dans chacun des compartiments 22 correspondants, au voisinage immédiat de l'intersection des cloisons 23. En variante, il pourrait y avoir plusieurs orifices par compartiment, et éventuellement plus de deux tubes 11, l'essentiel étant d'une part que la somme des sections des orifices qui débouchent dans chaque compartiment soit la même, et d'autre part que tous les orifices soient proches les uns des autres pour qu'ils restent à des niveaux voisins lorsque la colonne est inclinée.

Le distributeur secondaire 14 est identique au distributeur primaire 13, à deux différences près.

D'une part, les cloisons 23 sont supprimées. D'autre part, les goulottes 20 et 21 sont subdivisées en un nombre de compartiments secondaires 24 très supérieur à quatre par un ensemble de cloisons verticales 25 qui s'étendent entre les parois 19 et entre celles-ci et la paroi périphérique 16. Le nombre et la disposition des compartiments 24 sont choisis de manière qu'ils aient tous la même aire et le même taux de perforation, ainsi qu'une dimension maximale au plus égale à 300 mm environ.

Les distributeurs primaire 13 et secondaire 14 sont directement superposés, c'est-à-dire que chaque paroi 16 ou 19 de l'un d'eux se trouve dans le prolongement vertical de la paroi correspondante de l'autre. Le bord supérieur d'au moins certaines des parois du distributeur secondaire sont fixées au fond 15 du distributeur primaire, de manière à former un ensemble monobloc.

Le distributeur 1B est identique au distributeur 1A, à ceci près que, dans le distributeur primaire 13, les paires de parois parallèles 19 qui bordent des goulottes 20 adjacentes sont réunies à leur extrémité supérieure par des toits 26 à double pente et comportent une rangée horizontale d'ouvertures 27 juste au-dessous de ces toits, comme indiqué en traits mixtes à la Figure 2.

En service, le liquide qui descend dans la colonne 2 se trouve en relation d'échange de matière et de chaleur avec de l'oxygène gazeux obtenu par chauffage d'oxygène liquide, recueilli en cuve de la colonne 2, par de l'azote gazeux de tête de la colonne moyenne pression. Ce gaz s'enrichit progressivement en azote en montant dans la colonne 2.

Les circulations gazeuses n'ont pas été représentées sur la Figure 1, dans un but de clarté. Cependant, on comprend que le gaz montant traverse sans difficulté les distributeurs 1A et 1B à travers les lumières 17 et les ouvertures 27, comme schématisé par des flèches sur la Figure 2.

Lorsque la structure 3 est en mer, l'axe de la colonne 2 oscille autour de sa position normalement verticale. Les termes "horizontal" et "vertical" utilisés plus haut pour décrire le distributeur 1 doivent s'entendre pour cette position médiane de la colonne, mais, lorsque celle-ci est inclinée, la nappe de tubes 11, les fonds 15, les parois 16 et 19 et les cloisons 23 et 25 s'inclinent du même angle.

Grâce au cloisonnement du distributeur secondaire en compartiments multiples 24 de faible dimension, la différence de niveau entre les trous 18 de chaque compartiment 24 reste très faible dans toutes les positions de, l'axe X-X, dont l'inclinaison maximale est typiquement comprise entre 5 et 10°. Par conséquent, la hauteur de liquide qui les surmonte varie peu d'un trou à l'autre. On remarque, encore qu'à tout instant, les trous fortement alimentés sont voisins de trous faiblement alimentés d'un compartiment adjacent, de sorte que ces deux débits se compensent facilement dans la même région du pack 6 supérieur du tronçon de distillation immédiatement sous-jacent.

L'influence de l'inclinaison sur l'uniformité de la distribution du liquide est encore réduite d'une part par l'alimentation équilibrée des compartiments 24 par les quatre compartiments primaires 22, dont les aires sont quatre fois moindres que celle de la colonne 2, et d'autre part par le fait que, l'inclinaison variant de façon périodique, avec une période relativement courte typiquement de l'ordre de 20 s, le niveau moyen dans chaque compartiment 24 n'a pas le temps de varier de façon importante.

De plus, la proximité des tubes 11 et des orifices 111 assure une alimentation équilibrée des compartiments 22 malgré l'inclinaison de l'axe X-X. Ce résultat pourrait également être obtenu, en variante, au moyen de quatre tubes partant de quatre points adjacents du fond du séparateur 9 et ayant chacun un orifice 111 qui débouche à l'aplomb d'un compartiment 22 respectif.

Au total, on obtient sur toute la section de la colonne une distribution du liquide ayant une uniformité satisfaisante.

Si on le désire, on peut équiper chaque compartiment 22 de moyens de remélangeage de liquide, par exemple de cloisons inclinées descendant à partir de la paroi 16, comme connu en soi.

Le WO-A-90/10 497 décrit, entre autres, un garnissage analogue aux garnissages ondulés-croisés précités, mais perforé de manière différente. Le terme "garnissage ondulé-croisé" utilisé ici comprend également un tel garnissage, ainsi que tout garnissage analogue.

## Revendications

1. Distributeur de liquide pour colonne de distillation oscillante, **caractérisé en ce qu'**il comprend :
- un distributeur primaire (13) comportant des ouvertures (18) de distribution de liquide et délimitant N1 premiers compartiments (22), avec N1 ≥ 2;
- des moyens (9 à 11) d'alimentation équilibrée en liquide de chacun des premiers compartiments; et
- un distributeur secondaire (14) disposé sous le distributeur primaire (13) et comprenant une cuvette à fond perforé muni de lumières (17), ce fond occupant sensiblement toute la section de la colonne de distillation (2), cette cuvette étant subdivisée par des cloisons (25) en N2 seconds compartiments à fond perforé (24) , avec N2 > N1 ;
- le rapport de l'aire de chaque second compartiment (24) à la somme des sections des ouvertures (18) du distributeur primaire (13) qui l'alimentent étant sensiblement constant d'un second compartiment à un autre.

2. Distributeur suivant la revendication 1, **caractérisé en ce que** tous les seconds compartiments (24) ont sensiblement la même aire et le même taux de perforation.

3. Distributeur suivant la revendication 1 ou 2, **caractérisé en ce que** le nombre N1 est inférieur à 10 et le nombre N2 de l'ordre de plusieurs dizaines.

4. Distributeur suivant l'une quelconque des revendications 1 à 3, **caractérisé en ce que** le distributeur primaire (13) comprend une cuvette primaire dont le fond perforé (15) a la même configuration que celui de la cuvette secondaire et est superposé à ce dernier.

5. Distributeur suivant l'une quelconque des revendications 1 à 4, **caractérisé en ce que** lesdits moyens d'alimentation comprennent un séparateur de phases (9) et une conduite d'alimentation (10) reliée en amont à la partie inférieure de ce séparateur et en aval à des tubes (11) qui sont perforés à l'aplomb de chacun des premiers compartiments (22), le rapport de l'aire d'un premier compartiment à la somme des sections des perforations correspondantes des tubes (11) étant constant d'un premier compartiment à un autre.

6. Distributeur suivant la revendication 5, **caractérisé en ce que** les tubes (11) sont piqués en des points adjacents de la conduite d'alimentation (10) et comportent, chacun, des orifices (111) adjacents à l'axe central (X-X) du distributeur (1).

7. Distributeur suivant l'une quelconque des revendications 1 à 4 , **caractérisé en ce que** lesdits moyens d'alimentation comprennent un séparateur de phases et des tubes perforés reliés à des points adjacents de la partie inférieure du séparateur.

8. Colonne de distillation, **caractérisée en ce qu'**elle comprend un distributeur de liquide (1A, 1B) suivant l'une quelconque des revendications 1 à 7.

9. Colonne de distillation suivant la revendication 8, **caractérisée en ce que** ledit distributeur de liquide (1A) est disposé à un premier niveau de la colonne (2), notamment en tête de colonne, et **en ce que** la colonne comporte, à au moins un second niveau, un second distributeur de liquide (1B) suivant l'une quelconque des revendications 1 à 7.

10. Colonne de distillation suivant la revendication 9, **caractérisée en ce que** le distributeur primaire (13) du second distributeur de liquide (1B) occupe sensiblement toute la section de la colonne (2) et est directement alimenté par le liquide issu du tronçon de distillation (4) qui le surmonte.

11. Structure flottante (18) telle qu'une plate-forme pétrolière en mer ou une barge, sur laquelle est embarquée une colonne de distillation suivant l'une quelconque des revendications 8 à 10.

## Claims

1. Liquid distributor for an oscillating distillation column, **characterized in that** it comprises:
- a primary distributor (13) having openings (18) for distributing liquid and defining N1 first compartments (22), where N1 ≥ 2;
- means (9 to 11) for balanced feeding of liquid to each of the first compartments; and
- a secondary distributor (14) placed beneath the primary distributor (13) and comprising a dish with a perforated bottom provided with slots (17), this bottom occupying substantially the entire cross section of the distillation column (2), this dish being subdivided by partitions (25) into N2 second compartments (24) with perforated bottom, where N2 > N1;
- the ratio of the area of each second compartment (24) to the sum of the cross sections of the openings (18) of the primary distributor (13) which feed it being substantially constant from one second compartment to another.

2. Distributor according to Claim 1, **characterized in that** all the second compartments (24) have substantially the same area and the same degree of perforation.

3. Distributor according to Claim 1 or 2, **characterized in that** the number N1 is less than 10 and the number N2 is of the order of several tens.

4. Distributor according to any one of Claims 1 to 3, **characterized in that** the primary distributor (13) comprises a primary dish, the perforated bottom (15) of which has the same configuration as that of the secondary dish and is superposed with the latter.

5. Distributor according to any one of Claims 1 to 4, **characterized in that** the said feed means comprise a phase separator (9) and a feed line (10) connected upstream to the lower part of this separator and downstream to tubes (11) which are perforated plumb with each of the first compartments (22), the ratio of the area of a first compartment to the sum of the cross sections of the corresponding perforations of the tubes (11) being constant from one first compartment to another.

6. Distributor according to Claim 5, **characterized in that** the tubes (11) are tapped off at adjacent points of the feed line (10) and each have orifices (111) adjacent to the central axis (X-X) of the distributor (1).

7. Distributor according to any one of Claims 1 to 4, **characterized in that** the said feed means comprise a phase separator and perforated tubes connected to adjacent points of the lower part of the separator.

8. Distillation column, **characterized in that** it comprises a liquid distributor (1A, 1B) according to any one of Claims 1 to 7.

9. Distillation column according to Claim 8, **characterized in that** the said liquid distributor (1A) is placed at a first level of the column (2), especially at the top of the column, and **in that** the column includes, at least at a second level, a second liquid distributor (1B) according to any one of Claims 1 to 7.

10. Distillation column according to Claim 9, **characterized in that** the primary distributor (13) of the second liquid distributor (1B) occupies substantially the entire cross section of the column (2) and is directly fed with the liquid coming from the distillation section (4) which surmounts it.

11. Floating structure (18), such as an offshore oil platform or a barge, on which a distillation column according to any one of Claims 8 to 10 is mounted.

## Patentansprüche

1. Flüssigkeitsverteiler für eine oszillierende Destillationskolonne, **dadurch gekennzeichnet, daß** er folgendes aufweist:
- einen primären Verteiler (13), der Öffnungen (18) zur Verteilung von Flüssigkeit aufweist und N1 erste Abteile (22) begrenzt, mit N1 ≥ 2;
- Mittel (9 bis 11) zur ausgeglichenen Flüssigkeitszufuhr in jedes der ersten Abteile; und
- einen sekundären Verteiler (14), der unter dem primären Verteiler (13) angeordnet ist und eine Schale mit gelochtem Boden aufweist, der mit Langlöchern (17) versehen ist, wobei dieser Boden im wesentlichen den ganzen Querschnitt der Destillationskolonne (2) einnimmt, wobei diese Schale durch Trennwände (25) in N2 zweite Abteile (24) mit gelochtem Boden unterteilt wird, mit N2 > N1;
- wobei das Verhältnis der Grundfläche jedes zweiten Abteils (24) zur Summe der Querschnitte der Öffnungen (18) des primären Verteilers (13), die es speisen, von einem zweiten Abteil zum anderen im wesentlichen konstant ist.

2. Verteiler nach Anspruch 1, **dadurch gekennzeichnet, daß** alle zweiten Abteile (24) im wesentlichen die gleiche Grundfläche und die gleiche Anzahl an Löchern aufweisen.

3. Verteiler nach Anspruch 1 oder 2, **dadurch gekennzeichnet, daß** die Anzahl N1 geringer ist als 10, und daß die Anzahl N2 mehrere zehn beträgt.

4. Verteiler nach einem der Ansprüche 1 bis 3, **dadurch gekennzeichnet, daß** der primäre Verteiler (13) eine primäre Schale aufweist, deren gelochter Boden (15) die gleiche Konsfiguration aufweist wie der Boden der sekundären Schale und über diesem letzteren angeordnet ist.

5. Verteiler nach einem der Ansprüche 1 bis 4, **dadurch gekennzeichnet, daß** die Speisemittel einen Phasenseparator (9) und eine Speiseleitung (10) aufweisen, die stromaufwärts mit dem unteren Bereich dieses Separators und stromabwärts mit Rohren (11) verbunden ist, die senkrecht vor jedem der ersten Abteile (22) gelocht sind, wobei das Verhältnis zwischen der Grundfläche eines ersten Abteils zur Summe der Querschnitte der entsprechenden Löcher der Rohre (11) von einem ersten Abteil zum anderen konstant ist.

6. Verteiler nach Anspruch 5, **dadurch gekennzeichnet, daß** die Rohre (11) an der Speiseleitung (10) benachbarten Punkten durchstochen sind und je an die Mittelachse (X-X) des Verteilers (1) angrenzende Öffnungen (111) aufweisen.

7. Verteiler nach einem der Ansprüche 1 bis 4, **dadurch gekennzeichnet, daß** die Speisemittel einen Phasenseparator und gelochte Rohre aufweisen, die mit benachbarten Punkten des unteren Bereichs des Separators verbunden sind.

8. Destillationskolonne, **dadurch gekennzeichnet, daß** sie einen Flüssigkeitsverteiler (1A, 1B) nach einem der Ansprüche 1 bis 7 aufweist.

9. Destillationskolonne nach Anspruch 8, **dadurch gekennzeichnet, daß** der Flüssigkeitsverteiler (1A) auf einem ersten Niveau der Kolonne (2) angeordnet ist, insbesondere am Kopfende der Kolonne, und daß die Kolonne auf mindestens einem zweiten Niveau einen zweiten Flüssigkeitsverteiler (1B) nach einem der Ansprüche 1 bis 7 aufweist.

10. Destillationskolonne nach Anspruch 9, **dadurch gekennzeichnet, daß** der primäre Verteiler (13) des zweiten Flüssigkeitsverteilers (1B) im wesentlichen den ganzen Querschnitt der Kolonne (2) einnimmt und direkt mit der Flüssigkeit gespeist wird, die aus dem über ihm liegenden Destillationsabschnitt (4) stammt.

11. Schwimmende Struktur (18), wie eine Ölförderinsel im Meer oder eine Barge, auf der sich eine Destillationskolonne nach einem der Ansprüche 8 bis 10 befindet.
